# FASCICULE DE BREVET EUROPEEN

(11) **EP 3 350 491 B1**
(45) Date de publication et mention de la délivrance du brevet: **04.09.2019**
(21) Numéro de dépôt: 16769949.5
(22) Date de dépôt: 16.09.2016
(51) Int. Cl.: F16K 31/524, F16K 31/528, F16K 31/53, F02M 26/54, F02M 26/67, F16H 25/18

(54) **DISPOSITIF DE TRANSFORMATION D'UN MOUVEMENT DE PIVOTEMENT D'UN PIGNON EN UN MOUVEMENT DE TRANSLATION D'UN COULISSEAU ET VANNE COMPORTANT UN TEL DISPOSITIF**
VORRICHTUNG ZUR UMWANDLUNG EINER SCHWINGBEWEGUNG EINES ZAHNRADS IN EINE ÜBERSETZUNGSBEWEGUNG EINES SCHIEBERS UND VENTIL MIT SOLCH EINER VORRICHTUNG
DEVICE FOR CONVERTING A PIVOTING MOVEMENT OF A PINION INTO A MOVEMENT IN TRANSLATION OF A SLIDE AND VALVE COMPRISING SUCH A DEVICE

(30) Priorité: 18.09.2015 FR 1558785
(43) Date de publication de la demande: 25.07.2018
(73) Titulaire: Valeo Systemes de Controle Moteur, 95800 Cergy Saint Christophe (FR)
(72) Inventeur: MORCRETTE, Alexis, 63500 Issoire (FR)
(86) Numéro de dépôt international: PCT/EP2016/071964
(87) Numéro de publication internationale: WO 2017/046326

(56) Documents cités:
- EP-A2- 2 169 268
- DE-A1-102013 216 574
- FR-A1- 2 914 975
- FR-A1- 2 947 027

## Description

La présente invention concerne un dispositif de transformation d'un mouvement de pivotement d'un pignon en un mouvement de translation d'un coulisseau et une vanne comportant un tel dispositif. Une vanne de ce type est par exemple utilisable dans un circuit de recirculation de gaz d'échappement d'un moteur thermique de véhicule automobile.

Une telle vanne comporte généralement un corps dans lequel est monté coulissant un clapet qui est relié à un pignon de sortie d'un moteur rotatif par un dispositif de transformation d'un mouvement de pivotement d'un pignon, engrenant avec le pignon de sortie, en un mouvement de translation d'un coulisseau relié au clapet et monté coulissant dans le corps par l'intermédiaire d'une chemise de guidage. Le pignon est monté pivotant par rapport à un organe support du coulisseau comportant une paroi tubulaire montée fixe dans le corps. La paroi tubulaire est pourvue de surfaces de came coopérant chacune avec un galet suiveur monté sur un élément support qui, d'une part, est entraîné en rotation par une fourchette excentrée solidaire en rotation du pignon et qui, d'autre part, est monté pour pivoter à une extrémité du coulisseau. L'élément support est ainsi entraîné en rotation par le pignon provoquant le déplacement des galets le long des surfaces de came agencées pour déplacer en translation l'élément support qui entraîne avec lui le coulisseau et le clapet.

Le pignon est solidaire d'une extrémité d'un axe ayant une extrémité opposée de laquelle est solidaire la fourchette d'entraînement en rotation de l'élément support. L'axe est reçu à pivotement dans une chemise de guidage, dans une platine fixée au corps.

En outre, le corps de vanne délimite un siège pour le clapet solidaire d'une extrémité du coulisseau monté pour coulisser dans le corps entre une position d'obturation dans lequel le clapet est en appui contre le siège et une position d'ouverture dans laquelle le clapet est écarté du siège.

Le bon fonctionnement et la tenue dans le temps de la vanne et du dispositif de transformation nécessite un positionnement relatif précis du corps, et notamment du siège, du clapet, de la paroi tubulaire, de la platine, des chemises de guidage, de l'axe, du pignon et de la fourchette sans quoi survient une usure prématurée de tout ou partie de ces composants. L'obtention de la précision de positionnement requise rend le montage et l'usinage des composants relativement coûteux.

Le document FR 2914 975 A1 décrit un tel dispositif de transformation de mouvement et son application à une valve de recirculation EGR.

L'invention propose de réduire les contraintes de montage pesant sur le dispositif de transformation de mouvement afin de réduire le coût des produits dans lesquels il peut être implanté tout en minimisant le niveau de fuite de la vanne, c'est-à-dire le débit résiduel de fluide pouvant s'échapper lorsque le clapet est en position d'obturation, qui dépend fortement de la position relative initiale du clapet par rapport au siège.

À cet effet, la présente invention a pour objet un dispositif de transformation d'un mouvement de pivotement d'un pignon en un mouvement de translation d'un coulisseau, tel que décrit dans la revendication 1.

Ainsi, le pignon est monté directement sur l'organe support sans interposition d'une platine. Le positionnement relatif du pignon et de l'organe support en est facilité.

En outre, un tel dispositif permet avantageusement de réduire le jeu entre l'élément support et le coulisseau assurant ainsi, lorsque le dispositif est intégré dans une vanne, un bon placage du clapet sur le siège du corps de la vanne. Ainsi, le niveau de fuite de la vanne s'en trouve minimisé.

Le dispositif de transformation d'un mouvement de pivotement d'un pignon en un mouvement de translation d'un coulisseau selon l'invention peut également comprendre une ou plusieurs des caractéristiques ci-dessous, considérées individuellement ou selon toutes les combinaisons techniquement possibles :
- l'élément formant butée angulaire est configuré pour autoriser la rotation bidirectionnelle de l'élément support par rapport au coulisseau sur seulement une portion angulaire d'environ 10°.
- l'élément formant butée angulaire est fixé solidairement, de préférence soudé, au coulisseau ;
- l'élément formant butée angulaire comporte une partie principale et deux pattes formant une forme générale de U, et est configuré de sorte que l'élément support est destiné à être agencé entre les pattes et une extrémité du coulisseau est destinée à être insérée à travers deux orifices ménagés dans les pattes ;
- l'élément formant butée angulaire comporte deux parties principales parallèles l'une à l'autre et reliées par deux pattes formant une forme générale de O, et est configuré de sorte que l'élément support est destiné à être agencé entre les pattes et une extrémité du coulisseau est destinée à être insérée à travers deux orifices ménagés dans les pattes ;
- l'élément formant butée angulaire comporte une partie principale et deux pattes formant une forme générale de U, et est configuré de sorte que l'élément support est destiné à être agencé entre les pattes et une extrémité du coulisseau est destinée à être insérée à travers un orifice ménagé dans la partie principale ;
- l'organe support est une cloche ayant un fond dont est solidaire un pivot de l'organe support coaxial à la paroi tubulaire et sur lequel est monté le pignon, le fond présentant une ouverture de passage d'un élément de liaison du pignon à l'élément support ;
- la surface de came est formée par un flanc d'une rainure ménagée dans la paroi tubulaire ;
- le pignon est formé d'un secteur denté.

L'invention se rapporte également à une vanne comportant un corps dans lequel est monté coulissant un clapet relié à un pignon de sortie d'un moteur rotatif d'actionnement par un dispositif de transformation d'un mouvement de pivotement d'un pignon engrenant avec le pignon de sortie en un mouvement de translation d'un coulisseau relié au clapet, dans laquelle le dispositif de transformation est tel que décrit précédemment selon l'invention.

La structure de la vanne est relativement simple et le montage de celle-ci simplifié. En outre, le niveau de fuite de la vanne est minimisé assurant un bon fonctionnement et une tenue dans le temps de la vanne.

D'autres caractéristiques et avantages de l'invention apparaîtront à la lecture de la description détaillée de modes de réalisation donnés à titre d'exemples non limitatifs et illustrés, accompagnée des figures suivantes :
- la figure 1 est une vue partielle en coupe d'un premier mode de réalisation d'une vanne selon l'invention ;
- la figure 2 est une vue en perspective éclatée du dispositif de transformation de mouvement selon l'invention de la vanne de la figure 1 ;
- la figure 3 est une vue en perspective avec écorché du dispositif de transformation de la figure 2 ;
- la figure 4 est une vue partielle en coupe du dispositif de la figure 2 ; et
- les figures 5 et 6 sont des vues partielles en coupe d'un second et d'un troisième mode de réalisation d'un dispositif de transformation de mouvement selon l'invention.

Sur les figures, les éléments analogues sont désignés par des références identiques. En outre, les différents éléments ne sont pas nécessairement représentés à l'échelle afin de présenter une vue permettant de faciliter la compréhension de l'invention.

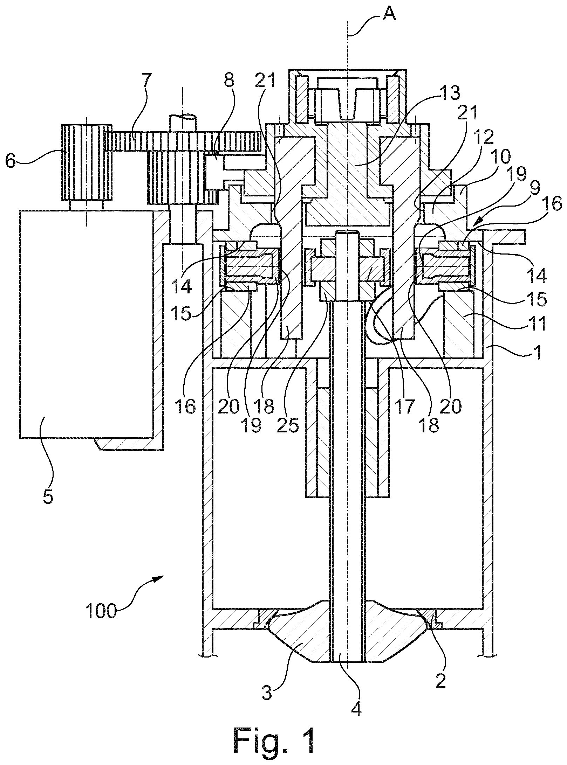

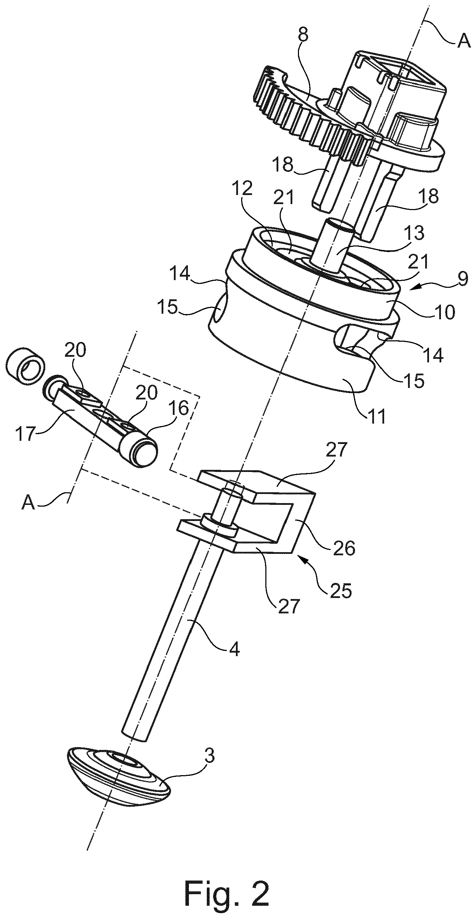

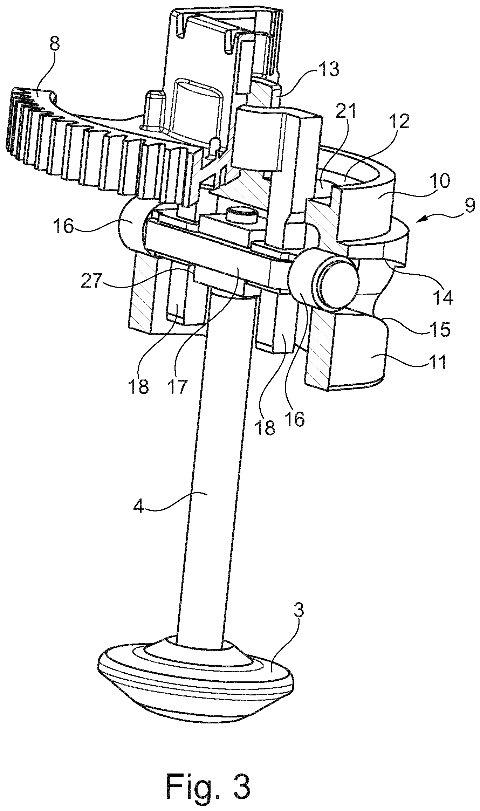

En référence aux figures 1 à 4, une vanne 100 conforme à l'invention comprend un corps 1 délimitant un siège 2 pour un clapet 3 solidaire d'une extrémité d'une tige formant un coulisseau 4 monté pour coulisser dans le corps 1 entre une position d'obturation dans lequel le clapet 3 est en appui contre le siège 2 et une position d'ouverture dans laquelle le clapet 3 est écarté du siège 2.

Un moteur 5 est fixé dans le corps 1 pour entraîner en translation le coulisseau 4 et donc le clapet 3. Le moteur 5 a un pignon de sortie 6 relié par un jeu d'engrenages 7 à un pignon 8 formé d'un secteur denté. Le jeu d'engrenages 7 est monté sur le corps 1. Le pignon de sortie 6, le jeu d'engrenages 7 et le pignon 8 pivotent autour d'axes parallèles à la direction A de coulissement du coulisseau 4. Le pignon 8 est associé à un dispositif, généralement désigné en 9, de transformation d'un mouvement de rotation du pignon 8 en un mouvement de translation du coulisseau 4.

Le dispositif 9 comprend un organe support 10, en forme d'une cloche fixée dans le corps 1, comportant une paroi tubulaire 11 centrée sur la direction de coulissement du coulisseau 4 et un fond 12 dont est solidaire un pivot 13 coaxial à la paroi tubulaire 11. Le pignon 8 est monté pour pivoter librement sur le pivot 13 de sorte que l'organe support 10 porte directement le pignon 8.

Deux rainures 14 sont ménagées transversalement dans la paroi tubulaire 11 en des positions diamétralement opposées. Chaque rainure 14 a une forme sensiblement en portion d'hélice agencée de manière à avoir un flanc inférieur en rampe formant une surface de came 15 sur la- quelle roule un galet 16. Les galets 16 sont montés aux extrémités d'un élément support 17 qui est monté pour pivoter à l'extrémité du coulisseau 4 opposée au clapet 3 et qui s'étend diamétralement dans l'espace intérieur de la paroi tubulaire 11. L'élément support 17 est monté fixe en translation sur le coulisseau 4.

L'élément support 17 est lié en rotation au pignon 8 par des éléments de liaison 18 formés chacun d'un doigt s'étendant parallèlement à la direction de coulissement et ayant une extrémité solidaire du pignon 8 et, à l'opposé, une portion d'extrémité reçue à coulissement dans des logements 19 qui sont ménagés dans l'élément support 17 et sont équipés de chemises 20 à faible coefficient de friction. A noter qu'en une seule pièce avec les chemises 20, sont formés les paliers des galets 16. Des ouvertures 21 en arc de cercle ménagées dans le fond 12 permettent le passage des éléments de liaison 18 et leur déplacement en arc de cercle centré sur le pivot 13. La rotation du pignon de sortie 6 provoque la rotation du pignon 8 par l'intermédiaire du jeu d'engrenages 7. Le pignon 8 entraîne en rotation l'élément support 17 par les éléments de liaison 18.

La rotation de l'élément support 17 provoque le déplacement des galets 16 le long des surfaces de came 15 et les galets 16, en coopérant avec les surfaces de came 15, déplacent en translation l'élément support 17 et donc le coulisseau 4 et le clapet 3. Comme l'élément support 17 est monté pivotant sur le coulisseau 4, l'élément support 17, lorsqu'il est entraîné en rotation par le pignon 8 via les éléments de liaison 18, n'exerce pas de couple sur le clapet 3 limitant ainsi les frottements du clapet 3 sur son siège.

Le dispositif 9 comporte en outre un élément 25 formant butée angulaire, agencé entre le coulisseau 4 et l'élément support 17, de manière à autoriser la rotation bidirectionnelle de l'élément support 17 par rapport au coulisseau 4 sur seulement une portion angulaire donnée, de préférence sur seulement une portion angulaire d'environ 10°.

Selon un mode de réalisation préféré de l'élément 25 formant butée angulaire illustré sur les figures 1 à 4, celui-ci comporte une partie principale 26 et deux pattes 27 formant une forme générale de U. De plus, l'élément 25 formant butée angulaire est configuré de sorte que l'élément support 17 est destiné à être agencé entre les pattes 27 et une extrémité 28 du coulisseau 4 est destinée à être insérée à travers deux orifices 29 ménagés dans les pattes 27.

Le coulisseau 4 comporte un épaulement 30 formant butée axiale de manière à empêcher un éventuel mouvement de translation de l'élément 25 formant butée angulaire le long du coulisseau 4. A cet effet, l'extrémité supérieure 28 du coulisseau 4 a un diamètre inférieur à celui du coulisseau 4 formant ainsi l'épaulement 30 et peut être obtenu par enlèvement de matière sur une portion cylindrique de l'extrémité de la tige formant le coulisseau 4.

L'élément 25 formant butée angulaire est fixé solidairement, de préférence soudé, au coulisseau 4 empêchant ainsi toute translation axiale de l'élément support 17 le long du coulisseau 4.

Ainsi, l'élément 25 formant butée angulaire est entraîné par la rotation de l'élément support 17 depuis sa position d'obturation initiale après une rotation libre sur une portion angulaire faible. De plus, l'élément 25 formant butée angulaire est tout d'abord entraîné par la rotation de l'élément support 17 pendant son retour à sa position d'obturation, puis sur la même portion angulaire l'élément support 17 tourne librement en rotation sans entraîner l'élément 25. Ainsi, l'élément 25 formant butée angulaire garantit le retour de l'élément support 17 à sa position d'obturation initiale avec une marge définie par la portion angulaire donnée. Ainsi, le niveau de fuite de la vanne qui dépend de la position relative entre le clapet et le siège (en position d'obturation) est constant au cours de l'utilisation de la vanne et peut être minimisé au cours de la fabrication. En effet, au cours de la fabrication, le siège et le clapet sont configurés pour assurer un bon placage du clapet sur le siège du corps de vanne et ainsi définir un niveau de fuite suffisamment petit pour être tolérable pour une position d'obturation initiale. Le retour de l'élément support 17 à sa position d'obturation initiale avec une marge définie par la portion angulaire donnée garantit le retour à la position relative initiale entre le clapet et le siège.

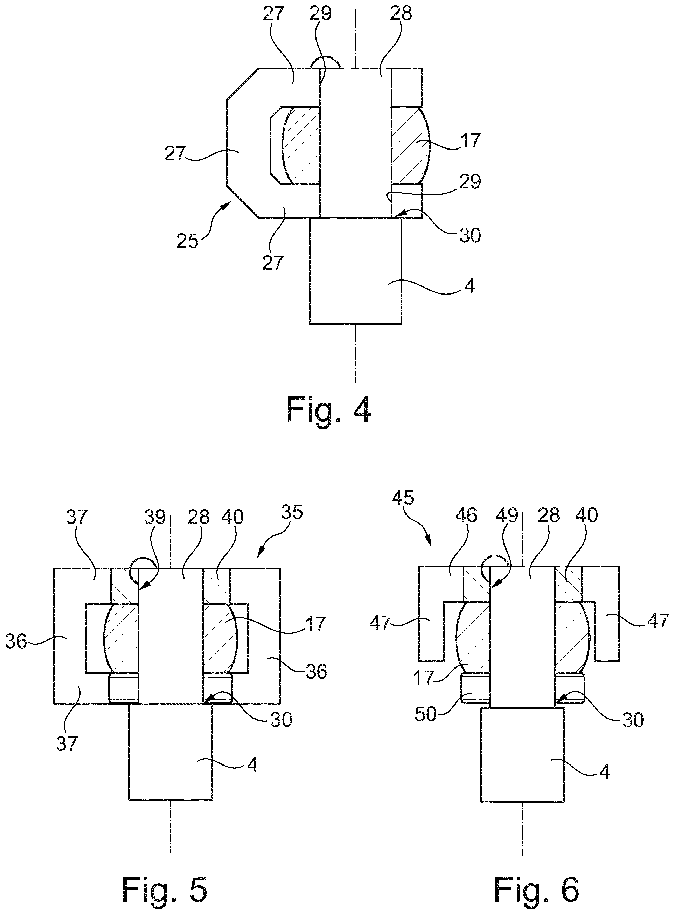

Selon un autre mode de réalisation illustré sur la figure 5, l'élément 35 formant butée angulaire comporte deux parties principales 36 parallèles l'une à l'autre et reliées par deux pattes 37. Chaque patte 37 s'étend à partir des parties principales 36 et est configurée pour que l'élément 35 formant butée angulaire présente une forme générale de O.

En outre, l'élément 35 formant butée angulaire est configuré de sorte que l'élément support 17 est destiné à être agencé entre les pattes 37 et une extrémité 28 du coulisseau est destinée à être insérée à travers deux orifices 39 ménagés dans les pattes 37.

Le coulisseau 4 comporte un épaulement 30 formant butée axiale de manière à empêcher un éventuel mouvement de translation de l'élément 35 formant butée angulaire le long du coulisseau 4. A cet effet, l'extrémité supérieure 28 du coulisseau 4 a un diamètre inférieur à celui du coulisseau 4 formant ainsi l'épaulement 30 et peut être obtenu par enlèvement de matière sur une portion cylindrique de l'extrémité de la tige formant le coulisseau 4.

L'élément 35 formant butée angulaire est fixé solidairement, de préférence soudé, au coulisseau 4 empêchant ainsi toute translation axiale de l'élément support 17 le long du coulisseau 4.

Bien entendu, le dispositif 9 de transformation d'un mouvement de pivotement du pignon en un mouvement de translation du coulisseau peut comprendre une rondelle 40 agencée à l'extrémité 28 supérieure du coulisseau et configurée pour empêcher une translation axiale de l'élément support 17 le long du coulisseau 4. Dans ce cas, l'orifice 39 de la patte supérieure 37 est configuré de sorte que la rondelle 40 s'insère intégralement dans l'orifice 39.

Selon un autre mode de réalisation illustré sur la figure 6, l'élément 45 formant butée angulaire comporte une partie principale 46 et deux pattes 47. Chaque patte 47 s'étend à partir de la partie principale 46 selon l'axe longitudinal du coulisseau 4 et est configurée pour que l'élément 45 formant butée angulaire présente une forme générale de U.

En outre, l'élément 45 formant butée angulaire est configuré de sorte que l'élément support 17 est destiné à être agencé entre les pattes 47 et une extrémité 28 du coulisseau est destinée à être insérée à travers un orifice 49 ménagé dans la partie principale 46.

Le coulisseau 4 comporte un épaulement 30 formant butée axiale de manière à empêcher un éventuel mouvement de translation de l'élément 45 formant butée angulaire le long du coulisseau 4. A cet effet, l'extrémité supérieure 28 du coulisseau 4 a un diamètre inférieur à celui du coulisseau 4 formant ainsi l'épaulement 30 et peut être obtenu par enlèvement de matière sur une portion cylindrique de l'extrémité de la tige formant le coulisseau 4.

L'élément 35 formant butée angulaire est fixé solidairement, de préférence soudé, au coulisseau 4 empêchant ainsi toute translation axiale de l'élément support 17 le long du coulisseau 4.

Bien entendu, le dispositif 9 de transformation d'un mouvement de pivotement du pignon en un mouvement de translation du coulisseau peut comprendre une première rondelle 40 agencée à l'extrémité 28 supérieure du coulisseau et configurée pour empêcher une translation axiale de l'élément support 17 le long du coulisseau 4. Dans ce cas, l'orifice 49 de la partie principale 46 est configuré de sorte que la première rondelle 40 s'insère intégralement dans l'orifice 49.

Bien entendu, le dispositif 9 de transformation d'un mouvement de pivotement du pignon en un mouvement de translation du coulisseau peut comprendre une seconde rondelle 50 agencée entre l'élément support 17 et le coulisseau 4 et configurée pour empêcher une translation axiale de l'élément support 17 le long du coulisseau 4.

Bien entendu, l'invention n'est pas limitée aux modes de réalisation décrits mais englobe toute variante entrant dans le cadre de l'invention telle que définie par les revendications.

En particulier, les moyens de guidage en rotation du pignon 8 peuvent être formés d'un élément mâle, comme le pivot 13, ou d'un élément femelle tel qu'un logement agencé pour assurer un guidage périphérique du pignon 8. Le pivot 13 peut être fixé rigidement au fond 12 de l'organe support 10.

L'organe support 10 peut avoir une forme différente de celle décrite et par exemple le fond 12 peut être remplacé par une poutre diamétrale supportant le pivot 13.

Les doigts 18 constituant les éléments de liaison peuvent avoir une extrémité solidaire de l'élément support et, à l'opposé, une portion d'extrémité montée pour coulisser dans un logement du pignon 8.

Les éléments de liaison peuvent avoir une structure différente de celle décrite et être formés par exemple de fourchettes d'entraînement de l'élément support 17.

Les surfaces de came 15 peuvent être formées d'une nervure en saillie dans la paroi tubulaire 11.

Le pignon 8 peut être relié au pignon de sortie du moteur par une courroie, au tout autre mode de transmission. Le moteur peut être monté pour avoir son axe formant un angle avec la direction de coulissement.

## Revendications

1. Dispositif (9) de transformation d'un mouvement de pivotement d'un pignon (8) en un mouvement de translation d'un coulisseau (4), le dispositif comprenant :
- un organe support (10) du coulisseau et un élément support (17) lié au pignon en rotation et lié au coulisseau en translation, le pignon étant monté pivotant par rapport à l'organe support (10) qui comporte une paroi tubulaire (11) fixe, la paroi tubulaire étant pourvue d'au moins une surface de came (15) coopérant avec un galet (16) suiveur monté sur l'élément support (17), le pignon étant porté par l'organe support coaxialement à la paroi tubulaire,
le dispositif étant **caractérisé en ce qu'**
- un élément (25 ; 35 ; 45) formant butée angulaire, est agencé entre le coulisseau (4) et l'élément support (17), de manière à autoriser la rotation bidirectionnelle de l'élément support (17) par rapport au coulisseau (4) sur seulement une portion angulaire donnée.

2. Dispositif selon la revendication 1, dans lequel l'élément (25 ; 35 ; 45) formant butée angulaire est configuré pour autoriser la rotation bidirectionnelle de l'élément support (17) par rapport au coulisseau (4) sur seulement une portion angulaire d'environ 10°.

3. Dispositif selon la revendication 1 ou 2, dans lequel l'élément (25 ; 35 ; 45) formant butée angulaire est fixé solidairement, de préférence soudé, au coulisseau (4).

4. Dispositif selon l'une quelconque des revendications 1 à 3, dans lequel l'élément (25) formant butée angulaire comporte une partie principale (26) et deux pattes (27) formant une forme générale de U, et est configuré de sorte que l'élément support (17) est destiné à être agencé entre les pattes (27) et une extrémité (28) du coulisseau (4) est destinée à être insérée à travers deux orifices (29) ménagés dans les pattes (27).

5. Dispositif selon l'une quelconque des revendications 1 à 3, dans lequel l'élément (35) formant butée angulaire comporte deux parties principales (36) parallèles l'une à l'autre et reliées par deux pattes (37) formant une forme générale de O, et est configuré de sorte que l'élément support (17) est destiné à être agencé entre les pattes (37) et une extrémité (28) du coulisseau (4) est destinée à être insérée à travers deux orifices (39) ménagés dans les pattes (37).

6. Dispositif selon l'une quelconque des revendications 1 à 3, dans lequel l'élément (45) formant butée angulaire comporte une partie principale (46) et deux pattes (47) formant une forme générale de U, et est configuré de sorte que l'élément support (17) est destiné à être agencé entre les pattes (47) et une extrémité (28) du coulisseau (4) est destinée à être insérée à travers un orifice (49) ménagé dans la partie principale (46).

7. Dispositif selon l'une quelconque des revendications 1 à 6, dans lequel l'organe support (10) est une cloche ayant un fond (12) dont est solidaire un pivot (13) de l'organe support (10) coaxial à la paroi tubulaire (11) et sur lequel est monté le pignon, le fond présentant une ouverture (21) de passage d'un élément de liaison (18) du pignon (8) à l'élément support (17).

8. Dispositif selon l'une quelconque des revendications 1 à 7, dans lequel la surface de came (15) est formée par un flanc d'une rainure (14) ménagée dans la paroi tubulaire (11).

9. Dispositif selon l'une quelconque des revendications 1 à 8, dans lequel le pignon (8) est formé d'un secteur denté.

10. Vanne (100) comportant un corps (1) dans lequel est monté coulissant un clapet (3) relié à un pignon de sortie (6) d'un moteur rotatif d'actionnement (5) par un dispositif (9) de transformation d'un mouvement de pivotement d'un pignon (8) engrenant avec le pignon de sortie en un mouvement de translation d'un coulisseau (4) relié au clapet, **caractérisé en ce que** le dispositif de transformation est conforme à l'une quelconque des revendications 1 à 9.

## Patentansprüche

1. Vorrichtung (9) zur Umwandlung einer Schwingbewegung eines Ritzels (8) in eine Translationsbewegung eines Schiebers (4), wobei die Vorrichtung aufweist:
- ein Trägerorgan (10) des Schiebers und ein Trägerelement (17), das mit dem Ritzel in Drehung verbunden ist und mit dem Schieber in Translation verbunden ist, wobei das Ritzel in Bezug auf das Trägerorgan (10) schwenkbar angebracht ist, das eine feste röhrenförmige Wand (11) aufweist, wobei die röhrenförmige Wand mit mindestens einer Nockenfläche (15) versehen ist, die mit einem Nockenfolger (16) zusammenwirkt, der auf dem Trägerelement (17) befestigt ist, wobei das Ritzel von dem Trägerorgan koaxial zu der röhrenförmigen Wand getragen ist,
wobei die Vorrichtung **dadurch gekennzeichnet ist, dass**
- ein Element (25; 35; 45), das einen Winkelanschlag bildet, zwischen dem Schieber (4) und dem Trägerelement (17) derart ausgebildet ist, um die bidirektionale Drehung des Trägerelements (17) in Bezug auf den Schieber (4) nur auf einem gegebenen Winkelbereich zu ermöglichen.

2. Vorrichtung nach Anspruch 1, wobei das Element (25; 35; 45), das einen Winkelanschlag bildet, konfiguriert ist, um die bidirektionale Drehung des Trägerelements (17) in Bezug auf den Schieber (4) nur auf einem gegebenen Winkelbereich von etwa 10° zu ermöglichen.

3. Vorrichtung nach Anspruch 1 oder 2, wobei das Element (25; 35; 45), das einen Winkelanschlag bildet, an dem Schieber (4) ortsfest befestigt, vorzugsweise angeschweißt, ist.

4. Vorrichtung nach einem der Ansprüche 1 bis 3, wobei das Element (25), das einen Winkelanschlag bildet, einen Hauptteil (26) und zwei Laschen (27) aufweist, die eine allgemein U-förmige Form bilden, und derart konfiguriert ist, dass das Trägerelement (17) dazu bestimmt ist, zwischen den Laschen (27) angeordnet zu werden und ein Ende (28) des Schiebers (4) dazu bestimmt ist, durch zwei Öffnungen (29) eingefügt zu werden, die in den Laschen (27) ausgebildet sind.

5. Vorrichtung nach einem der Ansprüche 1 bis 3, wobei das Element (35), das einen Winkelanschlag bildet, zwei Hauptteile (36) aufweist, die zueinander parallel sind und durch zwei Laschen (37) miteinander verbunden sind, die eine allgemein O-förmige Form bilden, und derart konfiguriert ist, dass das Trägerelement (17) dazu bestimmt ist, zwischen den Laschen (37) angeordnet zu werden und ein Ende (28) des Schiebers (4) dazu bestimmt ist, durch zwei Öffnungen (39) eingefügt zu werden, die in den Laschen (37) ausgebildet sind.

6. Vorrichtung nach einem der Ansprüche 1 bis 3, wobei das Element (45), das einen Winkelanschlag bildet, einen Hauptteil (46) und zwei Laschen (47) aufweist, die eine allgemein U-förmige Form bilden, und derart konfiguriert ist, dass das Trägerelement (17) dazu bestimmt ist, zwischen den Laschen (47) angeordnet zu werden und ein Ende (28) des Schiebers (4) dazu bestimmt ist, durch eine Öffnung (49) eingefügt zu werden, die in dem Hauptteil (46) ausgebildet ist.

7. Vorrichtung nach einem der Ansprüche 1 bis 6, wobei das Trägerorgan (10) eine Glocke ist, die einen Boden (12) aufweist, mit dem ein Drehzapfen (13) des Trägerorgans (10) fest verbunden ist, das koaxial zu der rohrförmigen Wand (11) ist, und auf dem das Ritzel befestigt ist, wobei der Boden eine Durchgangsöffnung (21) eines Verbindungselementes (18) des Ritzels (8) zum Trägerelement (17) aufweist.

8. Vorrichtung nach einem der Ansprüche 1 bis 7, wobei die Nockenfläche (15) durch eine Flanke einer Nut (14) gebildet ist, die in der röhrenförmigen Wand (11) ausgebildet ist.

9. Vorrichtung nach einem der Ansprüche 1 bis 8, wobei das Ritzel (8) durch einen Zahnsektor gebildet ist.

10. Ventil (100), umfassend einen Körper (1), in dem eine Klappe (3) verschiebbar angebracht ist, die mit einem Abtriebsritzel (6) eines Drehantriebsmotors (5) durch eine Vorrichtung (9) zur Umwandlung einer Schwingbewegung eines Ritzels (8), das mit dem Abtriebsritzel kämmt, in eine Translationsbewegung eines Schiebers (4) verbunden ist, der mit dem Ventil verbunden ist, **dadurch gekennzeichnet, dass** die Vorrichtung zur Umwandlung einem der Ansprüche 1 bis 9 entspricht.

## Claims

1. Device (9) for converting a pivoting movement of a pinion (8) into a translational movement of a slide (4), the device comprising:
- a slide support member (10) and a support element (17) connected to the pinion in terms of rotation and connected to the slide in terms of translation, the pinion being mounted with the ability to pivot with respect to the support member (10), which comprises a fixed tubular wall (11), the tubular wall being provided with at least one cam surface (15) collaborating with a cam follower (16) mounted on the support element (17), the pinion being carried by the support member coaxially with respect to the tubular wall, the device being **characterized in that**
- an element (25; 35; 45) forming an angular limit stop is arranged between the slide (4) and the support element (17), so as to allow two-directional rotation of the support element (17) with respect to the slide (4) over only a given angular portion.

2. Device according to Claim 1, in which the element (25; 35; 45) forming an angular limit stop is configured in such a way as to allow two-directional rotation of the support element (17) with respect to the slide (4) over only an angular portion of around 10°.

3. Device according to Claim 1 or 2, in which the element (25; 35; 45) forming an angular limit stop is securely attached, preferably welded, to the slide (4) .

4. Device according to any one of Claims 1 to 3, in which the element (25) forming an angular limit stop comprises a main part (26) and two legs (27) forming the overall shape of a U, and is configured in such a way that the support element (17) is intended to be arranged between the legs (27) and an end (28) of the slide (4) is intended to be inserted through two orifices (29) made in the legs (27).

5. Device according to any one of Claims 1 to 3, in which the element (35) forming an angular limit stop comprises two main parts (36) parallel to one another and connected by two legs (37) forming the overall shape of an O, and is configured in such a way that the support element (17) is intended to be arranged between the legs (37) and an end (28) of the slide (4) is intended to be inserted through two orifices (39) made in the legs (37).

6. Device according to any one of Claims 1 to 3, in which the element (45) forming an angular limit stop comprises a main part (46) and two legs (47) forming the overall shape of a U, and is configured in such a way that the support element (17) is intended to be arranged between the legs (47) and an end (28) of the slide (4) is intended to be inserted through an orifice (49) made in the main part (46).

7. Device according to any one of Claims 1 to 6, in which the support member (10) is a bell having an end (12) to which there is secured a pivot (13) of the support member (10) coaxial with the tubular wall (11) and on which the pinion is mounted, the end having a passage opening (21) for a connecting element (18) connecting the pinion (8) to the support element (17).

8. Device according to any one of Claims 1 to 7, in which the cam surface (15) is formed by one side of a slot (14) formed in the tubular wall (11).

9. Device according to any one of Claims 1 to 8, in which the pinion (8) is formed of a toothed sector.

10. Valve (100) comprising a body (1) in which is slidably mounted a valve disc (3) connected to an output pinion (6) of a rotary actuating motor (5) by a device (9) for converting a pivoting movement of a pinion (8) meshing with the output pinion into a translational movement of a slide (4) connected to the valve disc, **characterized in that** the conversion device is according to any one of Claims 1 to 9.
